# EUROPÄISCHE PATENTSCHRIFT

(11) **EP 0 963 674 B1**
(45) Veröffentlichungstag und Bekanntmachung des Hinweises auf die Patenterteilung: **14.04.2004**
(21) Anmeldenummer: 98913526.4
(22) Anmeldetag: 26.02.1998
(51) Int. Cl.: H04Q 7/38, H04Q 7/22

(54) **ZU EINEM ÖFFENTLICHEN MOBILKOMMUNIKATIONSSYSTEM KOMPATIBLES SCHNURLOS-KOMMUNIKATIONSSYSTEM**
PUBLIC MOBILE COMMUNICATION SYSTEM COMPATIBLE WIRELESS COMMUNICATION SYSTEM
SYSTEME DE COMMUNICATION SANS FIL COMPATIBLE AVEC UN SYSTEME DE COMMUNICATION MOBILE PUBLIC

(30) Priorität: 28.02.1997 DE 19708189
(43) Veröffentlichungstag der Anmeldung: 15.12.1999
(73) Patentinhaber: T-Mobile Deutschland GmbH, 53227 Bonn (DE)
(72) Erfinder: PERNICE, Frieder, verstorben (DE); LJUNGSTRÖM, Patrik, D-53639 Königswinter (DE); MOHRS, Walter, D-53123 Bonn (DE)
(74) Vertreter: Riebling, Peter, Dr.-Ing.
(86) Internationale Anmeldenummer: PCT/DE1998/000569
(87) Internationale Veröffentlichungsnummer: WO 1998/038826

(56) Entgegenhaltungen:
- EP-A- 0 740 482
- WO-A-95/02927
- WO-A-95/24106
- WO-A-98/28929

## Beschreibung

Die Erfindung betrifft ein zu einem öffentlichen Mobilkommunikationssystem kompatibles Schnurlos-Kommunikationssystem und ein Verfahren zum Betrieb desselben, nach dem Oberbegriff der unabhängigen Patentansprüche.

Bei den heutigen mobilen Kommunikationssystemen gibt es eine klare Unterscheidung zwischen Öffentlichen Mobilfunksystemen, wie z.B. dem GSM-System, und privaten Schnurlos-Kommunikationssystemen, die z.B. nach dem digitalen DECT-Standard arbeiten. Dies hat zu unterschiedlichen Gerätesystemen geführt, welche entweder für den Mobilfunkbetrieb oder den Schnurlos-Betrieb geeignet sind.

Es wurden schon Versuche unternommen, Endgeräte, insbesondere Mobilendgeräte, zu konstruieren, welche zum Betrieb in zwei verschiedenen Mobilkommunikationssystemen geeignet sind. Aufgrund der Inkompatibilität der verschiedenen Standards führt dies.jedoch zu relativ benutzerunfreundlichen und teueren Lösungen.

Ein anderer Ansatzpunkt liegt darin, die Basisstation eines Schnurlos-Kommunikationssystem derart einzurichten, daß diese zu einem öffentlichen Mobilkommunikationssystem kompatibel ist, d.h. mit herkömmlichen Mobilendgeräten des öffentlichen Mobilkommunikationssystems kommunizieren kann. Es fehlt jedoch an geeigneten Lösungsvorschlägen zur Realisation, z.B. der erforderlichen Sicherheitsfunktionen. Ein Problem liegt dabei darin, daß die Basisstation des Schnurlos-Kommunikationssystem mit einem leitungsgebundenen Festnetz verbunden ist, so daß eine direkte Beeinflussung der Basisstation über das Mobilkommunikationssystem nicht möglich ist.

Die WO-A-95/24106 beschäftigt sich mit einem sicheren persönlichen Kommunikationssystem, basierend auf einer an das öffentliche Festnetz angeschlossenen Basisstation, die einen Betrieb von Endgeräten eines Mobilkommunikationssystems erlaubt. Die Sicherheit der Kommunikation wird durch Verwendung der im Mobilkommunikationssystem üblichen Authentisierungsverfahren gewährleistet, wobei die Basisstation über das öffentliche Festnetz mit den Sicherheitseinrichtungen des Mobilkommunikationssystems verbunden ist und mit diesen Sicherheitsinformationen austauscht, um ein Einbuchen des Mobilendgerätes bei der Basisstation zu ermöglichen. Dieses Verfahren basiert also auf einem Austausch der Authentisierungssequenzen zwischen dem Mobilendgerät und der Basisstation einerseits, und zwischen Basisstation und Einrichtungen des Mobilkommunikationsnetzes andererseits.

Aus der WO-A-95/02927 ist ein Verfahren zur Steuerung von Sende-/Empfangseinrichtungen von Funkkommunikationssystemen bekannt. Dabei ist die Sende-/Empfangseinrichtung mit Einrichtungen zum Lesen einer sogenannten Smart Card ausgerüstet, auf welcher Informationen über die von der Sende-/Empfangseinrichtung benutzbaren, vom Betreiber des Funkkommunikationssystems freigegebenen Frequenzen gespeichert sind.

Aufgabe der Erfindung ist es, ein Schnurlos-Kommunikationssystem mit Sicherheitsfunktionen vorzuschlagen, welches mit einem öffentlichen Mobilkommunikationssystem kompatibel ist und die Benutzung zugehöriger Mobilendgeräte erlaubt.
Eine weitere Aufgabe besteht darin, daß das Schnurlos-Kommunikationssystem trotz seiner Eigenschaft als privates System die Möglichkeit aufweisen soll, unter Kontrolle des jeweiligen Mobilkommunikations-Netzbetreibers eingerichtet und betrieben zu werden.

Zur Lösung der gestellten Aufgabe ist die Erfindung durch die Merkmale der unabhängigen Patentansprüche gekennzeichnet.

Das Wesen der Erfindung besteht darin, die Basisstation des Schnurlos-Kommunikationssystems mit einem geeigneten Lese/Schreibgerät auszustatten, mit welchem Informationen herkömmlicher Identifikationsmodule, darunter werden verstanden z.B. Chipkarten, SIM's (Subsciber Identity Modules), allgemein alle aktiven informationsspeichernden und informationsverarbeitenden Datenträger, gelesen und beschrieben werden können. In Verbindung mit einer geeigneten Software und den auf dem Identifikationsmodul abgelegten Daten ist die Basisstation des Schnurlos-Kommunikationssystems nun in der Lage, die Funktionen einer Basisstation des Mobilkommunikationsnetzes mit Authentisierungsfunktionalität, genauer, die Funktionen eines Heimatregisters (HLR: Home Location Register) bzw. einer Berechtigungszentrale (AUC: Authentication Center) zu übernehmen. Damit kann sich jedes zur Benutzung befugte Mobilendgerät bei der Basisstation des Schnurlos-Kommunikationssystems einbuchen und über das Festnetz kommunizieren.

Im folgenden bezieht sich der Begriff "Basisstation", sofern nicht anders angegeben, auf die Basisstation des Schnurlos-Kommunikationssystems.

Im folgenden wird eine von vielen Möglichkeiten des Erfindungsgedankens am Beispiel eines GSM-Mobilkommunikationssystems beschrieben. Die Erfindung ist jedoch nicht auf das GSM-Mobilkommunikationssystem beschränkt.

Mit der Implementierung eines oder mehrerer Chipkartenleser/schreiber und einer üblichen SIM-Chipkarte in der Basisstation des Schnurlos-Kommunikationssystems wird erreicht, daß der Betrieb der Basisstation unter Kontrolle des jeweiligen GSM-Netzbetreibers arbeitet und daß dem Teilnehmer im "GSM-Schnurlosbetrieb" Sicherheitsmerkmale, wie z.B. Authentisierung und Verschlüsselung der Gesprächsdaten, wie beim Betrieb im GSM-Mobilfunknetz geboten werden. Wichtig ist, daß die zum Betrieb der Basisstation benötigte Chipkarte allein durch den Netzbetreiber ausgegeben wird, wie es auch bei GSM-Mobilendgeräten üblich ist.

Die in der Basisstation verwendete Chipkarte übernimmt hierbei zusammen mit einer geeigneten, in der Basisstation implementierten Software die Funktionen des Heimatregisters (HLR) bzw. der Berechtigungszentrale (AUC), das heisst, das Mobilendgerät authentisiert sich nun gegenüber der Basisstation des Schnurlossystems, und nicht, wie gewohnt gegenüber dem Mobilfunknetz. Dabei wird anhand der implementierten Software in der Basisstation eine Zufallszahl generiert, die mit dem in beiden Chipkarten, der Chipkarte der Basisstation und der Chipkarte des Mobilendgeräts, identisch abgelegten Kᵢ-Schlüssel und dem GSMsystemspezifischen A3-Algorithmus zu je einer SRES-Antwort (Authentisierungsergebnis) umgeformt wird. Bei Übereinstimmung der beiden Authentisierungsergebnisse - der Basisstation und des Mobilendgeräts - ist die Authentisierung erfolgreich. Diese Authentisierungsprozedur gleicht der des GSM-Systems.

Aus der gleichen Zufallszahl wird mit dem Kᵢ-Schlüssel und dem A8-Algorithmus in bekannter Weise der Schlüssel K_{c} hergeleitet, der zur Verschlüsselung der Kommunikation auf der Funkschnittstelle im Schnurlosbetrieb dient (wie beim GSM-System).

Neben den üblichen personenspezifischen Daten können auf dem SIM der Basisstation noch zusätzliche Daten, wie z.B. die erlaubten Frequenzen, die maximal zulässigen Ausgangsleistungen für die Basisstation und das Mobilendgerät, die zulässigen Dienste (Telefonie, Datenübertragung, Fax etc.) und alle anderen Initialisierungsparameter, auf die der Netzbetreiber Einfluss nehmen will und welche die Basisstation benutzen darf, nicht manipulierbar abgelegt werden. Dies entspricht, zumindest für die Dienste, der bekannten Berechtigungsverwaltung-im Heimatregister (HLR) eines GSM-Mobilfunknetzes.

Durch geeignetes Schlüsselmanagement kann erreicht werden, daß mehrere Teilnehmer, z.B. Familienangehörige, über ein und dieselbe Basisstation kommunizieren können. Dazu ist als erste Möglichkeit vorgesehen, daß jeder Teilnehmer, der die Basisstation benutzen will, seine eigene zweite SIM-Karte besitzt, die in die Basisstation eingesteckt werden kann. Die Basisstation benötigt hierfür mehrere Kartenlesegeräte.

Eine andere Möglichkeit besteht darin, daß auf der SIM-Karte der Basisstation Daten und Schlüssel für mehrere Teilnehmer gespeichert sind.
Des weiteren ist ein Gruppenschlüssel in der Basisstation denkbar, der die Authentisierung mehrerer individueller Teilnehmer erlaubt.

Wichtig ist, daß die in der Basisstation verwendete Chipkarte im Kernbereich identische Informationen enthält, wie die Chipkarte des GSM-Mobilendgerätes, die mit der Basisstation betrieben werden soll. Nur wenn die persönlichen Benutzerdaten, insbesondere die Sicherheitsfunktionen auf beiden Karten übereinstimmen, kann sich ein Mobilendgerät bei der Basisstation authentisieren und einbuchen.

Bei Kündigung des regulären GSM-Teilnehmerverhältnisses wird in der SIM-Karte des Mobilendgerätes, vorzugsweise über die GSM-Funkschnittstelle, die Berechtigung zum Kommunizieren mit der Basisstation gelöscht. Damit ist ein weiterer Betrieb der Basisstation auf den jeweiligen vom spezifischen Netzbetreiber freigeschalteten Frequenzen nicht mehr sinnvoll möglich, da sich das Mobilendgerät nicht mehr bei der Basisstation authentisieren kann.

Eine mögliche Ausführungsform sieht zudem vor, daß die Basisstation einen Zeitgeber (Timer) beinhaltet, der vom Netzbetreiber auf eine bestimmte Zeit programmiert ist, und bei Benutzung der Basisstation durch den Teilnehmer immer wieder automatisch zurückgesetzt wird. Bei Nichtbenutzung der Basisstation, z.B. nach Kündigung des Teilnehmerverhältnisses, verliert die Basisstation nach Ablauf der programmierten Zeitspanne die Berechtigung, den Sender auf den Frequenzen des Mobilkommunikationssystems in Betrieb zu nehmen. Wird die Basisstation für längere Zeit nicht benutzt, kann die Funktion des Timers durch abschalten der Basisstation eingefroren werden.

Hat der Teilnehmer z.B. vor Antritt eines langen Urlaubs, vergessen, die Basisstation abzuschalten und hat sich diese automatisch deaktiviert, so ist innerhalb eines definierten Zeitfensters die Möglichkeit einer Notwiederaufnahme vorgesehen.

Zur Realisierung einer GSM-kompatiblen Basisstation ist diese zunächst mit einem Kartenleser für GSM-SIM-Karten auszustatten. Weiterhin muß die Basisstation dazu in der Lage sein auf GSM-Standardfrequenzen zu senden und zu empfangen. Die Steuerung der Funktionen der Basisstation erfolgt über eine geeignete Software, wie sie z.B. in den GSM-Endgeräten benutzt wird, und welche die GSM-übliche Authentisierung und weiteren Funktionen durchführt und steuert.

Das Mobilendgerät selbst bedarf nur geringer softwaretechnischer Modifikation.

Figur 1 zeigt schematisch eine beispielhafte physikalische Konstellation des erfindungsgemäßen Systems;

Figur 2 zeigt schematisch eine beispielhafte logische Konstellation des erfindungsgemäßen Systems.

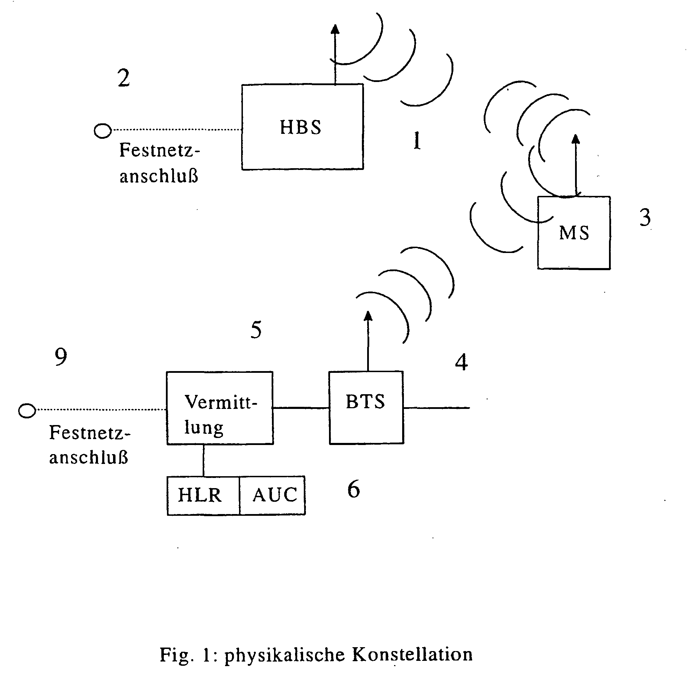

In Figur 1 sind schematisch einige Einrichtungen eines öffentlichen Mobilkommunikationssystems dargestellt. Es ist ein Mobilendgerät 3 vorhanden, welches sich im Versorgungsbereich einer Basisstation 4 des Mobilkommunikationssystems befindet und mit dieser über die Funkschnittstelle verschlüsselt kommunizieren kann. Die Basisstation 4 des Mobilkommunikationssystems ist mit einer Vermittlungsstelle 5 verbunden, die Zugang zu einem öffentlichen Festnetz 9 hat. Weiterhin steht die Vermittlungsstelle 5 mit dem Heimatregister (HLR) und der Berechtigungszentrale (AUC) des Mobilfunknetzes in Kontakt. Will sich das Mobilendgerät 3 im Mobilkommunikationsnetz einbuchen, so wird in bekannter Weise innerhalb des Heimatregisters bzw. der Berechtigungszentrale 6 eine Authentisierung des Mobilendgerätes 3 durchgeführt.

Des weiteren ist eine ebenfalls mit einem öffentlichen leitungsgebundenen Festnetz 2 (PSTN, ISDN) verbundene Basisstation 1 (HBS) eines Schnurlos-Kommunikationssystems dargestellt. Aufgrund der geringen Ausgangsleistung ist der Versorgungsbereich der Basisstation relativ klein. In der Regel befindet sich die Basisstation 1, innerhalb des Versorgungsbereiches einer oder mehrerer Basisstationen 4 eines öffentlichen Mobilkommunikationsnetzes.

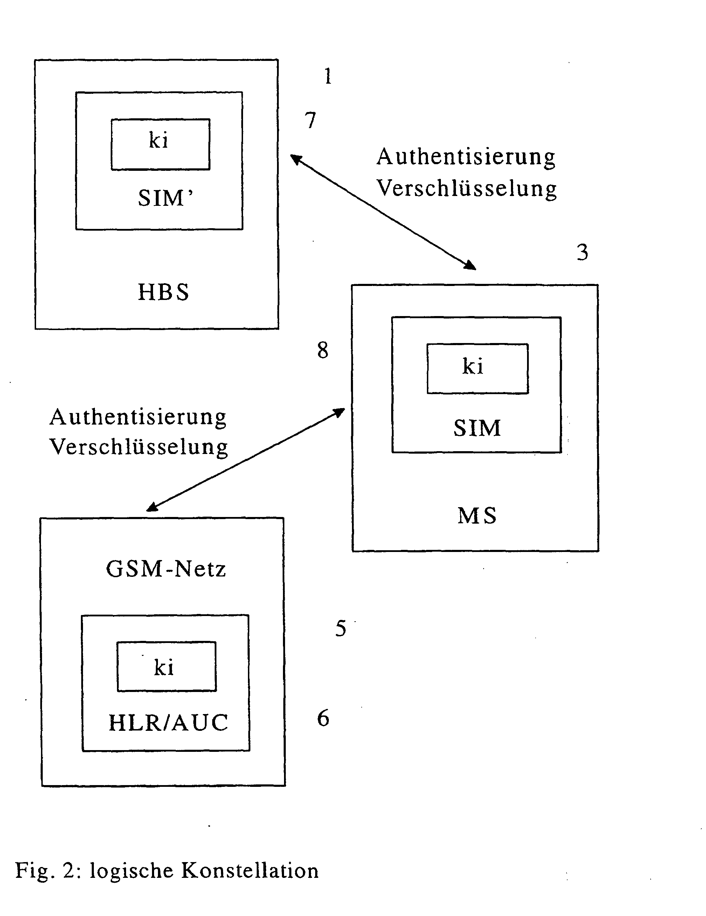

Wie in Figur 2 dargestellt ist, authentisiert sich das Mobilendgerät 3 im Mobilfunkbetrieb über das Mobilfunknetz, und zwar mit Hilfe eines spezifischen Identifikationsschlüssels (Kᵢ-Schlüssel) der einerseits in der SIM-Karte 8 des Mobilendgerätes 3 und andererseits im Heimatregister 6 (HLR) bez. der Berechtigungszentrale (AUC) des Mobilkommunikationssystems abgelegt ist.

Erfindungsgemäß ist nun die Basisstation 1 des Schnurlos-Kommunikationssystems mit einem Identifikationsmodul 7 (z.B. ebenfalls mit einer SIM-Karte) und einer geeigneten Software ausgestattet, um in Verbindung mit den auf dem Identifikationsmodul 7 abgelegten Daten nun dieselben Funktionen und Aufgaben wahrzunehmen, die das Heimatregister bzw. die Berechtigungszentrale des Mobilkommunikationssystems wahrnehmen, so daß das Mobilendgerät 3, sofern es sich im Versorgungsgebiet des Schnurlos-Kommunikationssystems befinden und eine Zugangsberechtigung hat, sich bei der ihr zugehörigen Basisstation 1 des Schnurlossystems authentisieren, einbuchen und verschlüsselt kommunizieren kann.

Das ist nur möglich, wenn wesentliche Bereiche der Daten des in der Basisstation 1 benutzten Identifikationsmoduls 7 identisch mit den auf der Chipkarte (SIM) des zugangsberechtigten Mobilendgerätes 3 abgelegten Daten ist.

Erfindungsgemäß ist die Basisstation 1 des Schnurlossystems nun kompatibel zum Mobilkommunikationssystem, d.h. im Standby-Modus sendet die Basisstation 1 des Schnurlossystems periodisch eine spezifische Kennung aus, um seine Anwesenheit und Betriebsbereitschaft anzuzeigen. Das Mobilendgerät 3 hört das Frequenzband nach der spezifischen Kennung der Basisstation 1 ab. Wenn das Mobilendgerät 3 in den Versorgungsbereich der Basisstation 1 kommt, und deren Kennung störungsfrei empfängt, wird das Mobilendgerät 3 versuchen sich in beschriebener Weise bei der Basisstation 1 einzubuchen. Dazu werden, wie beim GSM-System, Authentisierungs- und Initialisierungsnachrichten zwischen Basisstation 1 und Mobilendgerät 3 ausgetauscht. War die Authentisierung erfolgreich kann das Mobilendgerät 3 über das Festnetz 2 kommunizieren, ohne Umweg über das Mobilkommunikationsnetz.

Natürlich ist es auch möglich daß mehrere berechtigte Mobilendgeräte 3 ohne Mitwirkung eines öffentlichen Festnetzes 2, 9 oder des Mobilkommunikationsnetzes über die Basisstation 1 des Schnurlos-Kommunikationsnetzes miteinander verschlüsselt kommunizieren.

## Patentansprüche

1. Verfahren zum Betrieb eines Schnurlos-Kommunikationssystems mit einem Mobilendgerät (3) eines öffentlichen Mobilkommunikationssystems, mit einer mit dem öffentlichen Festnetz (2) verbundenen Basisstation (1), die auf der Funkschnittstelle mit dem Mobilkommunikationssystem, welches mindestens eine Funktion zur Authentisierung aufweist, kompatibel ist,
**gekennzeichnet durch**
Lesen/Schreiben von Informationen von/auf mindestens ein Identifikationsmodul (7) mittels einer Lese/Schreibeinrichtung **durch** die Basisstation (1), wobei Bereiche der Daten des in der Basisstation (1) benutzten Identifikationsmoduls (7) identisch mit den auf der Chipkarte (SIM) eines zugangsberechtigten Mobilendgerätes (3) abgelegten Daten sind und zumindest ein Kᵢ-Schlüssel, einen A3-Algorithmus und einen A8-Algorithmus umfassen,
Verarbeiten der gelesenen Daten mittels einer in der Basisstation (1) implementierten Software,
Authentisierung des Mobilendgeräts (3) gegenüber der Basisstation (1) **durch** Übermittlung der vom Identifikationsmodul (7) gelesenen und verarbeiteten Daten über die Funkschnittstelle an das Mobilendgerät, wobei die Basisstation (1) dieselben Funktionen und Aufgaben wahrnimmt, wie das Heimatregister bzw. die Berechtigungszentrale des Mobilkommunikationssystems, und
bei erfolgreicher Authentisierung, Betreiben des Mobilendgerätes (3) über das öffentliche Festnetz (2).

2. Verfahren nach Anspruch 1, **dadurch gekennzeichnet, daß** vom Netzbetreiber des Mobilkommunikationssystems die Berechtigung des Mobilendgerätes (3) zum Einbuchen bei der Basisstation (1) des Schnurlos-Kommunikationssystems gesperrt werden kann.

3. Verfahren nach Anspruch 1 oder 2, **dadurch gekennzeichnet, daß** auf dem mindestens einen Identifikationsmodul (7) neben individuellen Teilnehmerdaten zur Authentisierung weitere Daten, nämlich die erlaubten Frequenzen, die maximal zulässigen Ausgangsleistungen für die Basisstation (1) und das Mobilendgerät (3), die zulässigen Dienste und alle anderen Initialisierungsparameter, auf die der Netzbetreiber Einfluss nehmen will und welche Rahmenvorgabe für den Betrieb der Basisstation (1) des Schnurlos-Kommunikationssystems sind, nicht manipulierbar abgelegt sind.

4. Verfahren nach einem der Ansprüche 1 bis 3, **dadurch gekennzeichnet, daß** die Funkschnittstelle der Basisstation (4) des Schnurlos-Kommunikationssystems im Frequenzspektrum eines öffentlichen Mobilkommunikationssystems arbeitet.

5. Verfahren nach einem der Ansprüche 1 bis 4, **dadurch gekennzeichnet, daß** auf der Funkschnittstelle eine Verschlüsselung der übertragenen Daten angewendet wird.

6. Verfahren nach einem der Ansprüche 1 bis 5, **dadurch gekennzeichnet, daß** die Basisstation (1) einen Zeitgeber beinhaltet, der vom Netzbetreiber auf eine bestimmte Zeit programmiert ist, und der bei rechtmäßiger Benutzung der Basisstation (1) durch den Teilnehmer immer automatisch zurückgesetzt wird, wobei die Basisstation bei Nichtbenutzung, d.h. nach Ablauf der im Zeitgeber programmierten Zeitspanne die Berechtigung verliert, ihren Sender auf den Frequenzen des Mobilkommunikationssystems in Betrieb zu nehmen.

7. Verfahren nach Anspruch 6, **dadurch gekennzeichnet, daß** bei automatischer Abschaltung der Basisstation (1) durch Zeitgeberablauf die Möglichkeit einer Notwiederaufnahme des Betriebes vorgesehen ist.

8. Verfahren nach Anspruch 7, **dadurch gekennzeichnet, daß** eine Notwiederaufnahme des Betriebes der Basisstation (1) nur innerhalb eines definierten Zeitfensters möglich ist.

9. Schnurlos-Kommmunikationssystem zum Betrieb eines Mobilendgeräts (3) eines öffentlichen Mobilkommunikationssystems, mit einer mit dem öffentlichen Festnetz (2) verbundenen Basisstation (1), die auf der Funkschnittstelle mit dem Mobilkommunikationssystem, welches mindestens eine Funktion zur Authentisierung aufweist, kompatibel ist,
**gekennzeichnet durch**
eine in der Basisstation (1) angeordnete Lese/Schreibeinrichtung zum Lesen/Schreiben von Informationen von/auf mindestens ein Identifikationsmodul (7), wobei Bereiche der Daten des in der Basisstation (1) benutzten Identifikationsmoduls (7) identisch mit den auf der Chipkarte (SIM) eines zugangsberechtigten Mobilendgerätes (3) abgelegten Daten sind und zumindest ein Kᵢ-Schlüssel, einen A3-Algorithmus und einen A8-Algorithmus umfassen, und
eine in der Basisstation (1) implementierte Software zum Verarbeiten der gelesenen Daten und zum Authentisieren des Mobilendgeräts (3) gegenüber der Basisstation (1) anhand der vom Identifikationsmodul (7) gelesenen, verarbeiteten und über die Fünk-schnittstelle an das Mobilendgerät übermittelten Daten, wobei die Basisstation (1) dieselben Funktionen und Aufgaben wahrnimmt, wie das Heimatregister bzw. die Berechtigungszentrale des Mobilkommunikationssystems.

10. Schnurlos-Kommunikationssystem nach Anspruch 9, **dadurch gekennzeichnet, daß** als Identifikationsmodul (7) die in Mobilkommunikationssystemen üblicherweise benutzten Chipkarten (SIM), wie z.B. nach ISO ID-1, ID-000, DCS 1800, PCS 1900, verwendet werden.

## Claims

1. Method for the operation of a cordless communications system with a mobile terminal (3) of a public mobile communications system, with a base station (1) which is connected to the public fixed-line network (2) and which at the radio interface is compatible with the mobile communications system which has at least one function for authentication,
**characterised by**
reading/writing of information from/to at least one identification module (7) by means of a read-write device by the base station (1), wherein regions of the data of the identification module (7) used in the base station (1) are identical with the data filed on the chip card (SIM) of a mobile terminal (3) with authorised access and include at least one Kᵢ code, an A3 algorithm and an A8 algorithm,
processing of the read data by means of software'implemented in the base station (1),
authentication of the mobile terminal (3) relative to the base station (1) by transmission of the data read and processed by the identification module (7), via the radio interface to the mobile terminal, wherein the base station (1) performs the same functions and tasks as the home register or authorisation centre of the mobile communications system, and,
upon successful authentication, operation of the mobile terminal (3) via the public fixed-line network (2).

2. Method according to claim 1, **characterised in that** authorisation of the mobile terminal (3) to register with the base station (1) of the cordless communications system can be barred by the network operator of the mobile communications system.

3. Method according to claim 1 or 2, **characterised in that** on the at least one identification module (7), in addition to individual subscriber data for authentication, additional data are filed in a manner preventing them from being manipulated, namely the permitted frequencies, the maximum permitted output power for the base station (1) and the mobile terminal (3), the permitted services and all other initialisation parameters which the network operator wishes to influence and which are the skeleton standard for operation of the base station (1) of the cordless communications system.

4. Method according to one of claims 1 to 3, **characterised in that** the radio interface of the base station (4) of the cordless communications system works within the frequency spectrum of a public mobile communications system.

5. Method according to one of claims 1 to 4, **characterised in that** coding of the transmitted data is used at the radio interface.

6. Method according to one of claims 1 to 5, **characterised in that** the base station (1) contains a timer which is programmed for a certain time by the network operator and which, in case of proper use of the base station (1) by the subscriber, is always reset automatically, wherein in case of non-use, i.e. on expiry of the length of time programmed in the timer, the base station loses the authorisation to put its transmitter into operation at the frequencies of the mobile communications system.

7. Method according to claim 6, **characterised in that**, if the base station (1) is automatically switched off due to expiry of the timer, the possibility of emergency resumption of operation is provided.

8. Method according to claim 7, **characterised in that** emergency resumption of operation of the base station (1) is possible only within a predefined time window.

9. Cordless communications system for the operation of a mobile terminal (3) of a public mobile communications system, with a base station (1) which is connected to the public fixed-line network (2) and which at the radio interface is compatible with the mobile communications system which has at least one function for authentication,
**characterised by**
a read-write device arranged in the base station (1) for reading/writing of information from/to at least one identification module (7), wherein regions of the data of the identification module (7) used in the base station (1) are identical with the data filed on the chip card (SIM) of a mobile terminal (3) with authorised access and include at least one Kᵢ code, an A3 algorithm and an A8 algorithm, and
software implemented in the base station (1) for processing of the read data and for authentication of the mobile terminal (3) relative to the base station (1) with the aid of the data read and processed by the identification module (7) and transmitted via the radio interface to the mobile terminal, wherein the base station (1) performs the same functions and tasks as the home register or authorisation centre of the mobile communications system.

10. Cordless communications system according to claim 9, **characterised in that** the chip cards (SIM) usually used in mobile communications systems, e.g. in accordance with ISO ID-1, ID-000, DCS 1800, PCS 1900, are used as the identification module (7).

## Revendications

1. Procédé pour faire fonctionner un système de communication sans fil avec un terminal mobile (3) d'un système de communication mobile public, avec une station de base (1) qui est reliée au réseau fixe public (2) et qui, sur l'interface radio, est compatible avec le système de communication mobile qui comporte au moins une fonction d'authentification,
**caractérisé par**
une lecture/écriture d'informations par la station de base (1) sur au moins un module d'identification (7) à l'aide d'un dispositif de lecture/écriture, étant précisé que des zones des données du module d'identification (7) utilisé dans la station de base (1) sont identiques aux données déposées sur la carte à puce (SIM) d'un terminal mobile à accès autorisé (3) et comprennent au moins une clé Kᵢ, un algorithme A3 et un algorithme A8,
le traitement des données lues à l'aide d'un logiciel mis en application dans la station de base (1),
l'authentification du terminal mobile (3) par rapport à la station de base (1) grâce à la transmission au terminal mobile, par l'intermédiaire de l'interface radio, des données lues par le module d'identification (7) et traitées, la station de base (1) prenant en charge les mêmes fonctions et les mêmes tâches que l'enregistreur de localisation nominal ou le central d'autorisation du système de communication mobile, et
en cas d'authentification réussie, le fonctionnement du terminal mobile (3) grâce au réseau fixe public (2).

2. Procédé selon la revendication 1, **caractérisé en ce que** l'exploitant du système de communication mobile peut empêcher l'autorisation du terminal mobile (3) d'entrer en communication avec la station de base (1) du système de communication sans fil.

3. Procédé selon la revendication 1 ou 2, **caractérisé en ce qu'**on dépose de manière non manipulable sur le ou les modules d'identification (7), en plus des données d'abonnés individuelles pour l'authentification, d'autres données, à savoir les fréquences autorisées, les puissances de sortie maximales autorisées pour la station de base (1) et le terminal mobile (3), les services autorisés et tous les autres paramètres d'initialisation sur lesquels l'exploitant du réseau veut influer et qui représentent des données de base pour le fonctionnement de la station de base (1) du système de communication sans fil.

4. Procédé selon l'une des revendications 1 à 3, **caractérisé en ce que** l'interface radio de la station de base (4) du système de communication sans fil fonctionne dans le spectre de fréquences d'un système de communication mobile public.

5. Procédé selon l'une des revendications 1 à 4, **caractérisé en ce qu'**un chiffrement des données transmises est appliqué sur l'interface radio.

6. Procédé selon l'une des revendications 1 à 5, **caractérisé en ce que** la station de base (1) contient une horloge qui est programmée par l'exploitant du réseau pour une durée définie et qui, dans le cas d'une utilisation légale de la station de base (1) par l'abonné, est toujours remise à zéro automatiquement, étant précisé qu'en l'absence d'utilisation, c'est-à-dire après écoulement du laps de temps programmé dans l'horloge, la station de base perd l'autorisation de mettre en service son émetteur aux fréquences du système de communication mobile.

7. Procédé selon la revendication 6, **caractérisé en ce que** lors d'un arrêt automatique de la station de base (1) dû à l'écoulement de l'horloge, on prévoit la possibilité d'une remise en service d'urgence.

8. Procédé selon la revendication 7, **caractérisé en ce qu'**une remise en service d'urgence de la station de base (1) n'est possible qu'à l'intérieur d'une période définie.

9. Système de communication sans fil pour le fonctionnement d'un terminal mobile (3) d'un système de communication mobile public, avec une station de base (1) qui est reliée au réseau fixe public (2) et qui, sur l'interface radio, est compatible avec le système de communication mobile comportant au moins une fonction pour l'authentification,
**caractérisé par**
un dispositif de lecture/écriture disposé dans la station de base (1) pour la lecture/écriture d'informations sur au moins un module d'identification (7), étant précisé que des zones des données du module d'identification (7) utilisé dans la station de base (1) sont identiques aux données déposées sur la carte à puce (SIM) d'un terminal mobile à accès autorisé (3) et comprennent au moins une clé Kᵢ, un algorithme A3 et un algorithme A8, et
un logiciel mis en application dans la station de base (1) pour traiter les données lues et pour authentifier le terminal mobile (3) par rapport à la station de base (1) à l'aide des données lues par le module d'identification (7), traitées et transmises au terminal mobile par l'intermédiaire de l'interface radio, la station de base (1) prenant en charge les mêmes fonctions et les mêmes tâches que l'enregistreur de localisation nominal ou le central d'autorisation du système de communication mobile.

10. Système de communication sans fil selon la revendication 9, **caractérisé en ce qu'**on utilise comme module d'identification (7) les cartes à puce (SIM) habituellement utilisées dans les systèmes de communication mobile, comme par exemple ISO ID-1, ID-000, DCS 1800, PCS 1900.
